(19) **Europäisches Patentamt European Patent Office Office européen des brevets**

(11) **EP 4 509 988 A1**

(12) **EUROPEAN PATENT APPLICATION**
published in accordance with Art. 153(4) EPC

(43) Date of publication:
**19.02.2025  Bulletin 2025/08**

(21) Application number: **23830043.8**

(22) Date of filing: **20.06.2023**

(51) International Patent Classification (IPC):
**G06F 11/10** (2006.01)

(52) Cooperative Patent Classification (CPC):
**G06F 3/06; G06F 11/10**

(86) International application number:
**PCT/CN2023/101259**

(87) International publication number:
**WO 2024/001863 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.06.2022  CN 202210740423**
**23.08.2022  CN 202211017671**

(71) Applicant: **Huawei Technologies Co., Ltd.**
**Shenzhen, Guangdong 518129 (CN)**

(72) Inventors:
• **LI, Hang**
**Shenzhen, Guangdong 518129 (CN)**

• **HUI, Weifeng**
**Shenzhen, Guangdong 518129 (CN)**
• **CHEN, Xuqiang**
**Shenzhen, Guangdong 518129 (CN)**
• **HAN, Fengzhe**
**Shenzhen, Guangdong 518129 (CN)**
• **LUO, Rixin**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **DATA PROCESSING METHOD AND RELATED DEVICE**

(57)     A data processing method and a related device are provided, relating to the field of storage technologies. The method is performed by a primary node in a distributed storage system, and includes: obtaining a first request, where the first request is used to update a data block in an erasure coding EC stripe; then determining a first data block based on the first request; and sending a processing request to a set of secondary nodes, to indicate to offload a data block update operation performed by the primary node to one or more secondary nodes in the set of secondary nodes. According to the method, the data block update operation performed by the primary node is offloaded to the secondary node, thereby reducing a quantity of read operations in a process of updating the EC stripe, avoiding occupation of a large quantity of network resources, and ensuring system performance of the distributed storage system.

FIG. 5

**Description**

This application claims priorities to Chinese Patent Application No. 202210740423.1, filed with the China National Intellectual Property Administration on June 27, 2022 and entitled "DATA PROCESSING METHOD", and to Chinese Patent Application No. 202211017671.X, filed with the China National Intellectual Property Administration on August 23, 2022 and entitled "DATA PROCESSING METHOD AND RELATED DEVICE", which are incorporated herein by reference in their entireties.

**TECHNICAL FIELD**

This application relates to the field of storage technologies, and in particular, to a data processing method, a data processing apparatus, a computing device cluster, a computer-readable storage medium, and a computer program product.

**BACKGROUND**

With continuous development of information technologies, more industry applications are information-oriented, resulting in a large amount of data. To reduce data storage costs and ensure data reliability, the erasure coding (Erasure Code, EC) technology is proposed in the industry. EC is specifically a method in which data is broken into a plurality of groups of data blocks, a parity block is obtained through calculation based on each group of data blocks, and the group of data blocks and the parity blocks are stored at different nodes of a distributed storage system in a distributed manner.

An EC stripe (stripe) is a set including a group of data blocks and a parity block generated through check based on the group of data blocks. To ensure data consistency, data read and update operations are generally completed at a node at which one data block (for example, a 1st data block) in the EC stripe is located. The node at which the 1st data block in the EC stripe is located may also be referred to as a primary node, and a node at which other data blocks in the EC stripe is located and a node at which a parity block is located are referred to as secondary nodes.

However, when the EC stripe is updated, for example, when one data block in the EC stripe is updated, the primary node usually needs to perform a plurality of read operations and write operations. However, the plurality of read operations and write operations occupy a large quantity of network resources, and this reduces system performance of the distributed storage system.

**SUMMARY**

This application provides a data processing method. According to the method, a data block update operation performed by a primary node is offloaded to a secondary node, thereby reducing a quantity of read operations in a process of updating an EC stripe, avoiding occupation of a large quantity of network resources, and ensuring system performance of a distributed storage system. This application further provides a data processing apparatus, a computing device cluster, a computer-readable storage medium, and a computer program product corresponding to the foregoing method.

According to a first aspect, this application provides a data processing method. The method may be performed by a primary node in a distributed storage system. Specifically, the primary node obtains a first request, where the first request is used to update a data block in an EC stripe; and then determines a first data block based on the first request, where the first data block is a data block associated with the first request; and then the primary node sends a processing request to a set of secondary nodes that includes at least one secondary node in the distributed storage system, to indicate to offload a data block update operation of the primary node to one or more secondary nodes in the set of secondary nodes. In this way, a quantity of read operations in a process of updating the data block in the EC stripe can be reduced, network transmission overheads can be reduced, and system performance can be ensured.

In some possible implementations, the primary node may send a second request including a second data block to a first secondary node; receive the first data block returned by the first secondary node when the first data block is updated to the second data block; determine parity block update information based on the first data block and the second data block; and then send a third request including the parity block update information to the second secondary node, where the parity block update information is used to update the parity block.

According to the method, a part of operators for calculating a new parity block are delivered to a secondary node, to prevent the primary node from reading the parity block from the second secondary node at which the parity block is located. This reduces a quantity of read operations, reduces network transmission overheads, and ensures system performance.

In some possible implementations, the primary node may send a second request including a second data block to a first secondary node, where the second request indicates the first secondary node to update the first data block to the second data block; and determine parity block update information based on the first data block and the second data block.

Then, the primary node sends, through the first secondary node, a third request including the parity block update information to the second secondary node, where the parity block update information is used to update the parity block.

According to the method, all operators for calculating a new parity block are delivered to a secondary node, and specifically, are delivered to the first secondary node (which may also be referred to as an update node) at which the first data block is located and the second secondary node at which the parity block is located. This prevents the first secondary node from reading the parity block from the second secondary node, reduces a quantity of read operations, reduces network transmission overheads, and ensures system performance.

In some possible implementations, the second request sent by the primary node to the first secondary node is an update request, and a return value of the update request is the first data block, for indicating the first secondary node to update the first data block to the second data block and return the first data block. In this way, the primary node needs to perform only one update operation to replace one read operation and one write operation in conventional technologies. This reduces a quantity of operations, reduces network transmission overheads, and ensures system performance.

In some possible implementations, the first data block may be stored at the first secondary node, and the primary node and the first secondary node may be a same node. Similarly, in some other embodiments, the parity block may be stored at the second primary node, and the primary node and the second secondary node may be a same node.

In this way, the primary node may locally read the first data block or the parity block, to reduce a quantity of remote read operations, reduce occupied network resources, and ensure system performance.

In some possible implementations, before obtaining the first request, the primary node may further obtain a fourth request including a data stream, and then the primary node splits data in the data stream into a plurality of blocks, and writes the plurality of data blocks into data block storage nodes in the distributed storage system by column. The data block storage nodes include the primary node and the first secondary node. Then, the primary node calculates the parity block based on each group of data blocks in the plurality of data blocks, and writes the parity block into a parity block storage node in the distributed storage system. The parity block storage node includes the second secondary node.

The data blocks are stored in the distributed storage system by column, so that a quantity of times of cross-disk data reading in a subsequent data reading process can be reduced, and read overheads can be reduced.

In some possible implementations, when the plurality of data blocks obtained by splitting the data stream cannot be fully written into at least one EC stripe, the primary node may perform a no operation on a chunk that has no data in the at least one EC stripe, without performing a padding operation. In this way, write amplification can be reduced.

In some possible implementations, the primary node may further obtain a fifth request including a start address, and then determine a target node based on the start address and read a target data block from the target node by column. In this way, when the data is read, required data can be read by reading a hard disk only once at one node, thereby reducing read amplification.

According to a second aspect, this application provides a data processing method. The method is applied to a distributed storage system, and includes the following steps.

A primary node obtains a first request, where the first request is used to update a first data block in an erasure coding EC stripe; determines the first data block based on the first request, where the first data block is a data block associated with the first request; and sends a processing request to a set of secondary nodes, where the set of secondary nodes includes at least one secondary node in the distributed storage system, and the processing request indicates to offload a data block update operation performed by the primary node to one or more secondary nodes in the set of secondary nodes.

The set of secondary nodes updates the first data block and a parity block based on the processing request.

According to the method, the data block update operation performed by the primary node is offloaded to the set of secondary nodes. This reduces a quantity of read operations in a process of updating a data block in the EC stripe, reduces network transmission overheads, and ensures system performance.

In some possible implementations, that the primary node sends a processing request to a set of secondary nodes includes:

the primary node sends a second request including a second data block to a first secondary node.

That the first secondary node updates the first data block based on the processing request includes:

the first secondary node updates the first data block to the second data block, and returns the first data block.

The method further includes:

the primary node determines parity block update information based on the first data block and the second data block.

That the primary node sends a processing request to a set of secondary nodes includes:

sending a third request including the parity block update information to the second secondary node.

That the second secondary node updates the parity block based on the processing request includes:

the second secondary node updates the parity block based on the parity block update information.

According to the method, a part of operators for calculating a new parity block in a process of updating the data block by the primary node are delivered to a secondary node. This reduces an operation of reading the parity block from a secondary node at which the parity block is located, reduces network transmission overheads, and ensures system performance.

In some possible implementations, that the primary node sends a processing request to a set of secondary nodes includes:

the primary node sends a second request including a second data block to a first secondary node.

That the first secondary node updates the first data block based on the processing request includes:

the first secondary node updates the first data block to the second data block.

The method further includes:

the first secondary node determines parity block update information based on the first data block and the second data block.

That the primary node sends a processing request to a set of secondary nodes includes:

sending, through the first secondary node, a third request including the parity block update information to the second secondary node.

That the second secondary node updates the parity block based on the processing request includes:

the second secondary node updates the parity block based on the parity block update information.

According to the method, all operators for calculating a new parity block in a process of updating the data block by the primary node are delivered to a secondary node. This reduces an operation of reading the parity block from a secondary node at which the parity block is located, reduces network transmission overheads, and ensures system performance.

In some possible implementations, the second request is an update request, and the update request indicates the first secondary node to update the first data block to the second data block, and return the first data block. In this way, the primary node needs to perform only one update operation to replace one read operation and one write operation in conventional technologies. This reduces a quantity of operations, reduces network transmission overheads, and ensures system performance.

According to a third aspect, this application provides a data processing apparatus, and the apparatus includes modules configured to perform the data processing method according to any one of the first aspect or the possible implementations of the first aspect.

According to a third aspect, this application provides a data processing apparatus. The data processing apparatus includes units configured to perform the data processing method according to any one of the second aspect or the possible implementations of the second aspect.

According to a fourth aspect, this application provides a data processing system. The data processing system includes apparatuses configured to perform the data processing method according to any one of the second aspect or the possible implementations of the second aspect.

According to a fifth aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, so that the computing device or the computing device cluster performs the data processing method according to any one of the implementations of the first aspect or the second aspect.

According to a sixth aspect, this application provides a computer-readable storage medium. The computer-readable storage medium stores instructions, and the instructions indicate a computing device or a computing device cluster to perform the data processing method according to any one of the first aspect or the implementations of the first aspect.

According to a seventh aspect, this application provides a computer program product including instructions. When the computer program product runs on a computing device or a computing device cluster, the computing device or the computing device cluster is enabled to perform the data processing method according to any one of the first aspect or the implementations of the first aspect.

In this application, based on the implementations according to the foregoing aspects, the implementations may be further combined to provide more implementations.

**BRIEF DESCRIPTION OF DRAWINGS**

FIG. 1 is a schematic flowchart of updating an EC stripe according to this application;
FIG. 2 is a system architectural diagram of a distributed storage system according to this application;
FIG. 3 is a system architectural diagram of a distributed storage system according to this application;
FIG. 4 is a schematic diagram of an application scenario of a distributed storage system according to this application;
FIG. 5 is a flowchart of a data processing method according to this application;

FIG. 6 is a schematic diagram of row storage and column storage according to this application;

FIG. 7 is a schematic flowchart of writing data according to this application;

FIG. 8 is a schematic flowchart of updating an EC stripe according to this application;

FIG. 9 is a schematic flowchart of updating an EC stripe according to this application;

FIG. 10 is a schematic diagram of a structure of a data processing apparatus according to this application;

FIG. 11 is a schematic diagram of a structure of a data processing system according to this application;

FIG. 12 is a schematic diagram of a structure of a computing device cluster according to this application; and

FIG. 13 is a schematic diagram of a structure of a computing device cluster according to this application.

## DESCRIPTION OF EMBODIMENTS

For ease of understanding, some technical terms in embodiments of this application are first described.

EC stripe update, also referred to as EC stripe overwrite, specifically means that several data blocks in an EC stripe are replaced with several new data blocks, and a parity block in the EC stripe is correspondingly updated based on updating of the data blocks. According to different manners of generating a new parity block, EC stripe overwrite may be further classified into EC small write and EC big write. The EC small write means that a new parity block is determined by reading a parity block, a to-be-modified data block, and a modified data block. The EC big write means that a new parity block is determined by reading other data blocks in an EC stripe, and based on a modified data block and the other data blocks in the EC stripe. When a to-be-overwritten data block is small, an amount of data read in the EC small write mode is small and the efficiency is high. When a to-be-overwritten data block is large, an amount of data read in the EC big write mode is small and the efficiency is high.

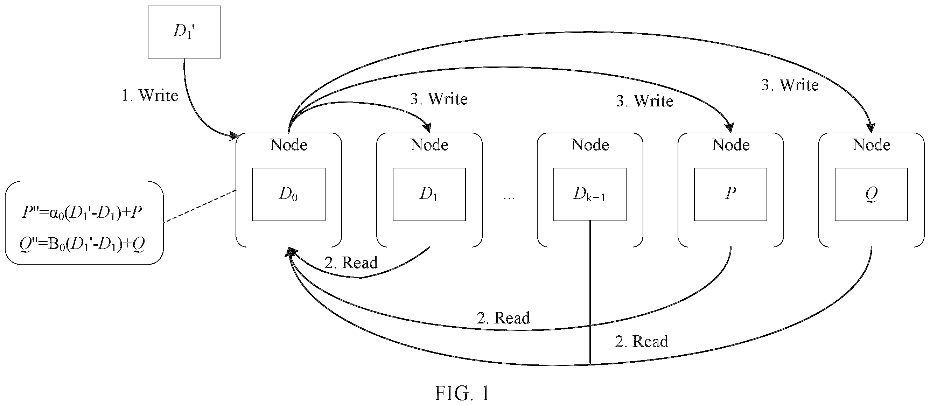

The following describes an EC stripe update process by using an example. Refer to a schematic flowchart of updating an EC stripe shown in FIG. 1. In this example, the EC stripe includes a data block $D_0$ to a data block $D_{k-1}$, a parity block $P$, and a parity block $Q$. Anode at which the data block $D_0$ is located is a primary node, nodes at which a data block $D_1$ to the data block $D_{k-1}$ are located are first secondary nodes, nodes at which the data block $D_0$ to the data block $D_{k-1}$ are stored are also referred to as data block storage nodes, and nodes at which the parity block $P$ and the parity block $Q$ are located are second secondary nodes, which are also referred to as parity block storage nodes.

As shown in FIG. 1, a client requests to overwrite the data block $D_1$ in the EC stripe with a data block $D_1'$. To ensure strong consistency of data, to-be-modified data such as the data block $D_1$ needs to be first read to the primary node, and the parity block $P$ and the parity block $Q$ need to be read to the primary node. The primary node calculates a new parity block $P'$ based on the data block $D_1$, the data block $D_1'$, and the parity block $P$, and calculates a new parity block $Q'$ based on the data block $D_1$, the data block $D_1'$, and the parity block $Q$. The details are specifically as follows.

$$P' = \alpha_0(D_1' - D_1) + P \tag{1}$$

$$Q' = \beta_0(D_1' - D_1) + Q \tag{2}$$

In the formula, $\alpha_0$ and $\beta_0$ are different check coefficients.

Then, the primary node writes the data block $D_1'$, the new parity block P', and the new parity block $Q'$ into nodes at which the data block $D_1$, the parity block $P$, and the parity block $Q$ are located. In this way, updating a data block in the EC stripe requires three read operations and three write operations. This occupies a large quantity of network resources and reduces system performance.

To resolve a problem in conventional technologies that a large quantity of network resources are occupied and system performance are reduced due to a plurality of read operations and write operations, this application provides a data processing method applied to a distributed storage system. Specifically, a primary node in the distributed storage system obtains a first request, where the first request is used to update a data block in an EC stripe. The primary node may determine a first data block based on the first request, where the first data block is a data block associated with the first request. Then, the primary node sends a processing request to a set of secondary nodes that includes at least one secondary node in the distributed storage system, to indicate to offload a data block update operation of the primary node to one or more secondary nodes in the set of secondary nodes.

According to the method, a data block update operation performed by the primary node is offloaded to the set of secondary nodes, for example, an operator for calculating a new parity block is delivered to a second secondary node at which the parity block is located, so that the primary node or a first secondary node (which may also be referred to as an update node) at which the first data block is located does not read the parity block from the second secondary node. This reduces a quantity of read operations, reduces network transmission overheads, and ensures system performance. Different from other EC optimization technologies, this application focuses on changing an EC data transmission procedure and data distribution, to improve data transmission and disk access efficiency. Therefore, this application can be used in to a plurality of storage scenarios, and are more applicable.

Further, the method further supports optimization of a data block update process. For example, one read operation and one write operation may be combined into one read/write operation. In this way, only one read/write operation and two write operations are required to update an EC stripe, and network transmission overheads are reduced by half. This greatly reduces occupation of network resources and improves system performance.

The following describes a system architecture in embodiments of this application with reference to the accompanying drawings.

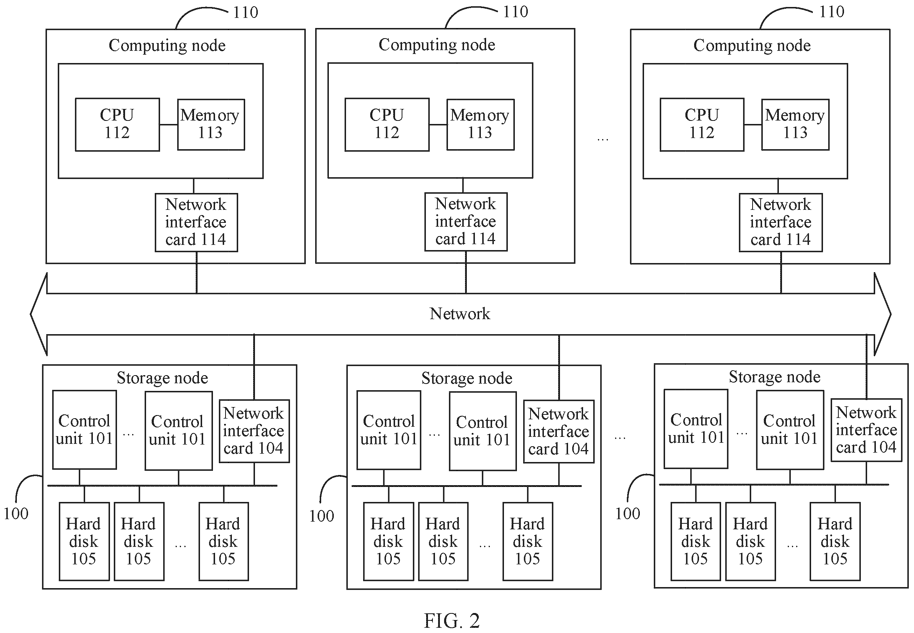

Refer to a system architecture diagram of a distributed storage system shown in FIG. 2. The system is of a storage-computing separation structure, and includes a computing node cluster and a storage node cluster. The computing node cluster includes one or more computing nodes 110 (FIG. 2 shows two computing nodes 110, but is not limited to two computing nodes 110), and the computing nodes 110 may communicate with each other. The computing node 110 is a computing device, such as a server, a desktop computer, or a controller of a storage array. In terms of hardware, as shown in FIG. 2, the computing node 110 includes at least a processor 112, a memory 113, and a network interface card 114. The processor 112 is a central processing unit (central processing unit, CPU), and is configured to process a data access request from outside the computing node 110 or a request generated inside the computing node 110. For example, when receiving a data write request sent by a user, the processor 112 temporarily stores data in the data write request in the memory 113. When a total amount of data in the memory 113 reaches a specific threshold, the processor 112 sends the data stored in the memory 113 to a storage node 100 for persistent storage. In addition, the processor 112 is further configured for data calculation or processing, for example, metadata management, data deduplication, data compression, storage space virtualization, address translation, and the like. FIG. 2 shows only one CPU 112. In actual application, there are usually a plurality of CPUs 112, and one CPU 112 has one or more CPU cores. A quantity of CPUs and a quantity of CPU cores are not limited in this embodiment.

The memory 113 is an internal memory that directly exchanges data with the processor. The data can be read and written in the memory at a high speed at any time, and the memory serves as a temporary data memory of an operating system or another running program. There are at least two types of memories. For example, the memory may be a random access memory or a read-only memory (Read Only Memory, ROM). For example, the random access memory is a dynamic random access memory (Dynamic Random Access Memory, DRAM), or a storage class memory (Storage Class Memory, SCM). The DRAM is a semiconductor memory, and is a volatile memory (volatile memory) device like most random access memories (Random Access Memories, RAMs). The SCM uses a composite storage technology that combines both a conventional storage apparatus feature and a memory feature. The storage class memory can provide a faster read/write speed than the hard disk, but is slower than the DRAM in terms of an access speed and cheaper than the DRAM in terms of costs. However, the DRAM and the SCM are merely examples for description in this embodiment. The memory may further include another random access memory, for example, a static random access memory (Static Random Access Memory, SRAM) and the like. For example, the read-only memory may be a programmable read-only memory (Programmable Read-Only Memory, PROM), an erasable programmable read-only memory (Erasable Programmable Read-Only Memory, EPROM), or the like. In addition, the memory 113 may alternatively be a dual in-line memory module or a dual in-line memory module (Dual In-line Memory Module, DIMM for short), that is, a module formed by a dynamic random access memory (DRAM), or may be a solid-state drive (Solid State Disk, SSD). In actual application, a plurality of memories 113 and memories 113 of different types may be configured in the computing node 110. A quantity and types of the memories 113 are not limited in this embodiment. In addition, the memory 113 may be configured to have a power conservation function. The power conservation function means that even if a system suffers a powered failure and then is powered on again, the data stored in the memory 113 is not lost. A memory with a power conservation function is a non-volatile memory.

The network interface card 114 is configured to communicate with the storage node 100. For example, when a total amount of data in the memory 113 reaches a specific threshold, the computing node 110 may send a request to the storage node 100 through the network interface card 114 for persistent data storage. In addition, the computing node 110 may further include a bus, configured to perform communication between components in the computing node 110. In terms of functions, because a main function of the computing node 110 in FIG. 2 is a computing service, and a remote memory may be used to implement persistent storage when the data is stored, the computing node 110 has fewer local memories than those of a conventional server, thereby reducing costs and space. However, this does not mean that the computing node 110 cannot have a local memory. In actual implementation, the computing node 110 may also have a few built-in hard disks or a few external hard disks.

Any computing node 110 may access any storage node 100 in the storage node cluster through a network. The storage node cluster includes a plurality of storage nodes 100 (FIG. 2 shows three storage nodes 100, but is not limited to three storage nodes 100). One storage node 100 includes one or more controllers 101, a network interface card 104, and a plurality of hard disks 105. The network interface card 104 is configured to communicate with the computing node 110. The hard disk 105 is configured to store data, and may be a magnetic disk or a storage medium of another type, for example, a solid-state drive, a shingled magnetic recording hard disk, or the like. The controller 101 is configured to write the data into the hard disk 105 or read the data from the hard disk 105 based on a data read/write request sent by the computing node 110. In a data read/write process, the controller 101 needs to convert an address carried in the data read/write request into an address that can be identified by the hard disk. It can be learned that the controller 101 also has some simple calculation functions.

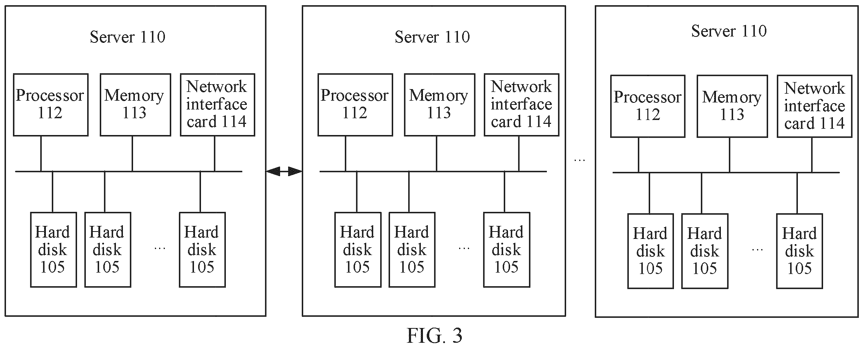

FIG. 3 is a system architectural diagram of another distributed storage system to which an embodiment of this application is applied. The system is in an architecture integrating storage and compute, and the system includes a storage cluster. The storage cluster includes one or more servers 110 (FIG. 3 shows three servers 110, but is not limited to three servers 110), and the servers 110 may communicate with each other. The server 110 is a device that has both a computing capability and a storage capability, for example, a server, a desktop computer, or the like. For example, an ARM server or an X86 server may be used as the server 110 herein.

In terms of hardware, as shown in FIG. 3, the server 110 includes at least a processor 112, a memory 113, a network interface card 114, and a hard disk 105. The processor 112, the memory 113, the network interface card 114, and the hard disk 105 are connected to each other through a bus. The processor 112 and the memory 113 are configured to provide computing resources. Specifically, the processor 112 is a central processing unit CPU, configured to process a data access request from outside of the server 110 (an application server or another server 110), and is also configured to process a request generated inside the server 110. The memory 113 is an internal memory that directly exchanges data with the processor. The data can be read and written in the memory at a high speed at any time, and the memory serves as a temporary data memory of an operating system or another running program. In actual application, a plurality of memories 113 and memories 113 of different types may be configured in the server 110. A quantity and types of the memories 113 are not limited in this embodiment. In addition, the memory 113 may be configured to have a power conservation function. The hard disk 105 is configured to provide storage resources, for example, store data. The hard disk may be a magnetic disk or another type of storage medium, for example, a solid-state drive, a shingled magnetic recording hard disk, or the like. The network interface card 114 is configured to communicate with another server 110.

It should be noted that FIG. 2 and FIG. 3 are merely schematic architectures of the distributed storage system. In another possible implementation of this embodiment of this application, the distributed storage system may alternatively use another architecture. For example, the distributed storage system may alternatively use a fully converged architecture or a memory fabric architecture.

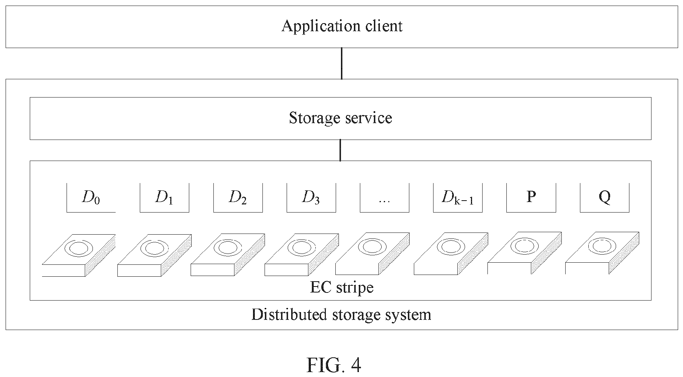

Further, the distributed storage system may provide a storage service, for example, provide a storage server for a user in a form of a storage interface, so that the user can use storage resources of the distributed storage system through the storage interface. Refer to a schematic diagram of an application scenario of a distributed storage system shown in FIG. 4. A user may access the distributed storage system through a client (for example, an application client). The distributed storage system may use the architecture shown in FIG. 2 or FIG. 3.

For example, when the distributed storage system uses the architecture shown in FIG. 2, a client may invoke a storage interface provided by a storage service to generate a storage request, and send the storage request to the distributed storage system. After receiving the storage request, a computing node in the distributed storage system may split data into a plurality of groups of data blocks, calculate a parity block based on each group of data blocks, and write each group of data blocks and the parity block determined based on the group of data blocks into different storage nodes 100 in a distributed manner, for example, write the parity blocks into hard disks 105 at different storage nodes 100. In this way, an EC stripe is formed. A storage node 100 that stores a first data block (for example, a data block $D_0$) stored in the EC stripe may be considered as a primary node, a storage node 100 that stores other data blocks (for example, a data block $D_1$, ..., and a data block $D_{k-1}$) stored in the EC stripe may be considered as a first secondary node, and a storage node 100 that stores parity blocks (for example, a parity block $P$ and a parity block $Q$) may be considered as a second secondary node.

For another example, when the distributed storage system uses the architecture shown in FIG. 3, a client may invoke a storage interface provided by a storage service to generate a storage request, and send the storage request to the distributed storage system. A server 110 in the distributed storage system may split data into a plurality of groups of data blocks, calculate a parity block based on each group of data blocks, and write each group of data blocks and the parity block determined based on the group of data blocks into different servers 110, for example, write the parity blocks to hard disks 105 of different servers 100. A server 110 that stores a first data block (for example, a data block $D_0$) in the EC stripe may be considered as a primary node, a storage node 100 that stores other data blocks (for example, a data block $D_1$, ..., and a data block $D_{k-1}$) in the EC stripe may be considered as a first secondary node, and a server 110 that stores parity blocks (for example, a parity block $P$ and a parity block $Q$) may be considered as a second secondary node.

The client is configured to access the distributed storage system by using the storage service. The distributed storage system may respond to access of the user to the distributed storage system by using the storage service, and return an access result. The access result may be different according to different access operations. For example, when the access operation is a write operation, the access result may be represented as a notification indicating a successful write. For another example, when the access operation is a read operation, the access result may be a read data block.

In a scenario of EC stripe overwrite, a primary node may obtain a first request used to update a data block in an EC stripe, determine the first data block based on the first request, and then send a processing request to a set of secondary nodes, to indicate to offload a data block update operation performed by the primary node to one or more secondary nodes in the set of secondary nodes. For example, the processing request may indicate to offload the data block update operation performed by the primary node to the first secondary node at which the first data block is located and the second secondary node at which the parity block is located.

It should be noted that the first data block and the parity block may be stored in different nodes other than the primary node in the distributed storage system. In some embodiments, the first data block may alternatively be stored at the primary node. In this case, the primary node and the first secondary node are a same node. In some other embodiments, the parity block may alternatively be stored at the primary node. In this case, the primary node and the second secondary node may be a same node.

The following describes the data processing method in this embodiment of this application by using a scenario in which the primary node, the first secondary node, and the second secondary node are different nodes.

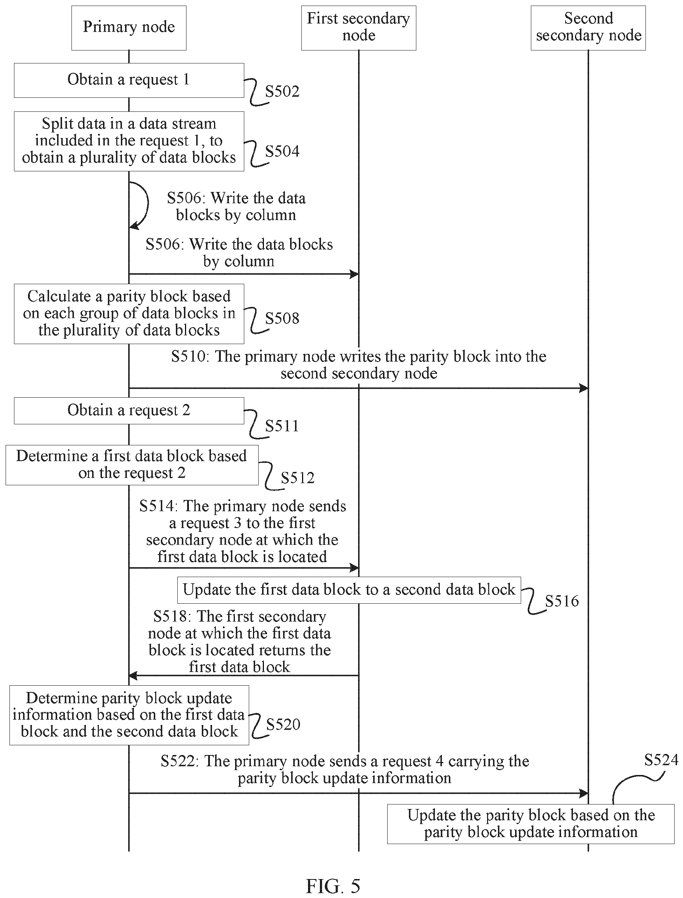

Refer to a flowchart of a data processing method shown in FIG. 5. The method includes the following steps.

S502: A primary node obtains a request 1.

The request 1 includes a data stream. The request 1 requests to write data in the data stream into a distributed storage system for persistent storage. The request 1 may be generated by an application client according to a service requirement, and the request 1 may be a write request or another request for writing data. According to different service requirements of the application client, the request 1 may include different types of data streams. For example, when the application client is a short video application or a long video application, the request 1 may include a video data stream. For another example, when the application client is a file management application or a text editing application, the request 1 may include a text data stream. The primary node may receive the request 1 delivered by the application client for persistent storage of the data in the data stream carried in the request 1.

S504: The primary node splits the data in the data stream included in the request 1, to obtain a plurality of data blocks.

The data stream may be an ordered sequence of bytes with a start point and an end point. Specifically, the primary node may split, through fixed-size chunking or variable-size chunking, the data in the data stream carried in the request 1, to obtain the plurality of data blocks. The fixed-size chunking refers to splitting data in a data stream into blocks based on a specified chunking granularity. The variable-size chunking refers to splitting data in a data stream into data blocks of an unfixed size. The variable-size chunking may include sliding window variable-size chunking and content-defined variable-size chunking (content-defined chunking, CDC).

For ease of understanding, the following uses fixed-size chunking as an example for description. Specifically, when the size of the data in the data stream is an integer multiple of a chunking granularity, the primary node may evenly split the data in the data stream into a plurality of data blocks. When the size of the data in the data stream is not an integer multiple of a chunking granularity, the primary node may pad the data in the data stream, for example, pad a zero at the end of the data stream, so that the size of the data in the data stream after padding is an integer multiple of the chunking granularity. Then, the primary node evenly splits the data in the data stream into a plurality of data blocks at the chunking granularity. For example, a size of data in a data stream is 20 KB, and the primary node performs chunking at a chunking granularity of 4 KB, to obtain five data blocks whose sizes are respectively 4 KB.

In some embodiments, for a case in which a size of data in a data stream is not an integer multiple of a chunking granularity, the primary node may not pad the data in the data stream, but obtain, through chunking at the chunking granularity, K-1 data blocks whose sizes are equal to the chunking granularity and one data block whose size is not equal to the chunking granularity.

It should be noted that S504 may not be performed when the data processing method in this embodiment of this application is performed. For example, when the size of the data in the data stream is relatively small and is insufficient for chunking, or the data in the data stream has been chunked in advance, S504 may not be performed.

S506: The primary node writes the plurality of data blocks by column into data block storage nodes including the primary node and the first secondary node.

It is assumed that the data block storage node may store L data blocks in each column, where L is a positive integer. In this case, the primary node may first write the plurality of data blocks into the primary node by column, and after the columns in the primary node are full, write remaining data blocks into the first secondary node by column.

When there are a plurality of first secondary nodes, the primary node may first write the remaining data blocks into the 1st first secondary node by column. By analogy, when the first secondary node is fully written, if there are remaining data blocks, the primary node writes the remaining data blocks into a next first secondary node by column.

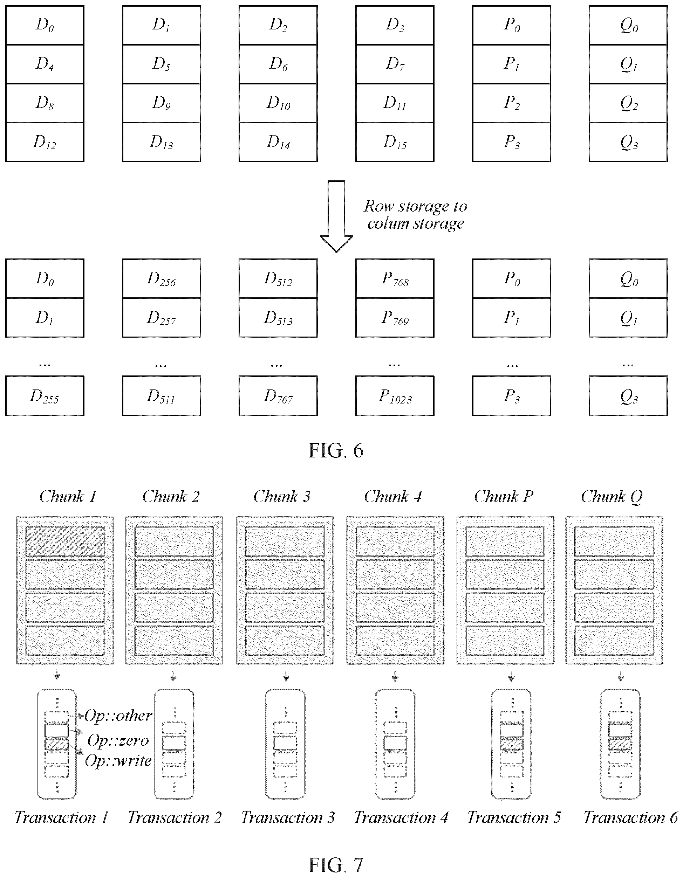

For ease of understanding, the following provides descriptions with reference to an example. Refer to a schematic diagram of row storage and column storage shown in FIG. 6. The row storage refers to storage by row, and the column storage refers to storage by column. In this example, a size of each data block is 4K, a data block storage node may store 256 data blocks in each column, there are 4 data block storage nodes, and there are two parity block storage nodes. If the primary node writes the data block storage nodes by row, a data block $D_0$ to a data block $D_3$ are respectively written into four data block storage nodes, namely, one primary node and three first secondary nodes, and $P_0$ and $Q_0$ are respectively written into different parity block storage nodes. Similarly, the data block $D_4$ to the data block $D_7$ are respectively written into four data block storage nodes, and $P_1$ and $Q_1$ are respectively written into different parity block storage nodes. If the primary node writes the data block storage node by column, a data block $D_0$ to a data block $D_{255}$ are written into the primary node, a data block $D_{256}$ to a data block $D_{511}$ are written into the 1st first secondary node, and by analogy, a data block $D_{512}$ to a data block $D_{767}$ are written into the 2nd first secondary node, and a data block $D_{768}$ to a data block $D_{1023}$ are written into the 3rd first secondary node.

In some possible implementations, a plurality of data blocks may not be fully written into one EC stripe. For example, when 256 data blocks are stored in each column, and a quantity of data block storage nodes is 4, if a quantity of data blocks in a data stream is less than 769 (256*3+1), when at least one data block in the data stream is insufficient to be fully written into one EC stripe, write amplification may be reduced by omitting a null part. During specific implementation, the primary node may perform a no operation (denoted as zero Op) on a chunk (chunk) that has no data in the at least one EC stripe, and does not need to perform a padding operation, so that write amplification can be reduced.

As shown in FIG. 7, when writing a data block into a chunk 1, the primary node may add a zero Op to a transaction 1 (denoted as a transaction 1) corresponding to the primary node, and write Ops in transactions 2 to 4 (denoted as transactions 2 to 4) are all replaced by the zero Op. Accordingly, chunks 2 to 4 do not actually allocate space or write data to disks. In addition, when data is being read, correct data can be required to return to an upper layer and the data cannot be read from disks. In this way, write amplification can be reduced.

In view of this, the primary node may first determine a size of the data stream. If the size of the data in the data stream is insufficient to be fully written into the stripe, only a chunk that needs to be padded may be written, and an idle chunk is not padded. This not only improves write performance, but also reduces space waste.

S508: The primary node calculates a parity block based on each group of data blocks in the plurality of data blocks.

Specifically, the primary node may group the plurality of data blocks. For example, the primary node may group the plurality of data blocks according to a row in which each data block is located. Rows in which a same group of data blocks are located have a same row number. Then, the primary node may perform calculation on each group of data blocks according to a parity algorithm, to generate a parity block. The primary node may generate different parity blocks according to different parity algorithms. For ease of understanding, a process of calculating a parity block is still described by using an example in FIG. 6.

In this example, when the primary node writes the data blocks by column, the primary node may obtain a parity block $P_0$ and a parity block $Q_0$ through calculation based on a data block $D_1$, a data block $D_{256}$, a data block $D_{512}$, and a data block $D_{768}$. Similarly, the primary node may obtain a parity block $P_1$ and a parity block $Q_1$ through calculation based on a data block $D_2$, a data block $D_{257}$, a data block $D_{513}$, and a data block $D_{769}$.

In this embodiment of this application, the data distribution method may be adjusted from a row storage to column storage. In this way, data blocks with adjacent addresses may be centrally placed in a same disk, for example, a data block $D_0$ and a data block $D_1$ are placed in a same disk. Correspondingly, one EC stripe may include data blocks in different data segments, instead of continuous data blocks in one data segment. As shown in FIG. 6, an EC stripe may include a data block $D_0$, a data block $D_{256}$, a data block $D_{512}$, a data block $D_{768}$, and parity blocks $P_0$ and $Q_0$. When the data block $D_0$ is lost because the disk or node where the data block $D_0$ is located is faulty, the data block $D_0$ may be restored based on the data block $D_{256}$, the data block $D_{512}$, the data block $D_{768}$, and the parity blocks $P_0$ and $Q_0$.

S510: The primary node writes the parity block into a parity block storage node including the second secondary node.

When there are a plurality of parity block storage nodes, that is, there are a plurality of second secondary nodes, the primary node may separately write the parity block into the second secondary node corresponding to the parity block.

It should be noted that, S506 and S508 may be performed in a specified sequence, and then S510 is performed. In some embodiments, S506 and S508 may be performed in parallel, and then S510 is performed. In some other embodiments, S506 and S510 may also be performed in parallel. For example, after S508 is first performed to obtain the parity block, the data block and the parity block are written into corresponding nodes in parallel. A sequence of S506, S508, and S510 is not limited in this embodiment of this application.

It should be further noted that S502 to S510 are optional steps in this embodiment of this application, and the foregoing steps may not be performed when the data processing method in this embodiment of this application is performed. For example, the following steps may be directly performed in the data processing method in this embodiment of this application, to update the EC stripe. Details are described below.

S511: The primary node obtains a request 2.

The request 2 is used to update the data block in the EC stripe. For example, the request 2 is used to update the first data block in the EC stripe to the second data block. The request 2 includes the second data block. In some embodiments, the request 2 may further include a logical address of the first data block, to quickly address the first data block.

S512: The primary node determines the first data block based on the request 2.

The first data block is specifically a data block associated with the request 2. Specifically, the primary node may parse the request 2, to obtain a logical address of a data block that needs to be updated in the request 2, and determine the first data block based on the logical address.

S514: The primary node sends a request 3 to the first secondary node at which the first data block is located.

S516: The first secondary node at which the first data block is located updates the first data block to the second data block.

S518: The primary node receives the first data block returned by the first secondary node at which the first data block is located.

S520: The primary node determines parity block update information based on the first data block and the second data block.

S522: The primary node sends a request 4 to the second secondary node at which the parity block is located.

S524: The second secondary node updates the parity block based on the parity block update information in the request 4.

In a scenario of updating an EC stripe, the request 2 may alternatively be referred to as a first request, and the request 3 and the request 4 may alternatively be collectively referred to as a processing request. The processing request is a request sent by the primary node to the set of secondary nodes, where the request 3 may be referred to as a second request, and the request 4 may be referred to as a third request. In a scenario of constructing an EC stripe, the request 1 may alternatively be referred to as a fourth request.

In the example in FIG. 5, the request 3 and the request 4 indicate to offload the data block update operation performed by the primary node to the first secondary node and the second secondary node. The following describes the offloading process in detail.

The request 3 sent by the primary node to the first secondary node includes the second data block, and the request 3 specifically indicates the first secondary node to update the first data block to the second data block. Considering that when the first data block in the EC stripe is updated, the parity block also changes accordingly, the primary node may read the first data block based on the request 3, to calculate a new parity block.

It should be noted that the request 3 may be an update request, and a return value of the update request is the first data block. In this way, when updating the first data block, the first secondary node at which the first data block is located may read the first data block, and then write the second data block. In addition, the first secondary node may further return the first data block to the primary node. In this way, the second data block is written and the first data block is read by using one update operation (which is specifically a read/write operation). In some possible implementations, the primary node may alternatively send an extra request to read the first data block, to calculate the parity block update information.

After receiving the first data block returned by the first secondary node at which the first data block is located, the primary node may determine, according to an EC algorithm, the parity block update information based on the first data block and the second data block. For example, the primary node may determine the parity block update information based on the first data block and the second data block by using a formula (1) or a formula (2).

The request 4 sent by the primary node to the second secondary node includes the parity block update information. The request 4 is specifically used to update the parity block. The second secondary node may update the parity block based on the parity block update information in the request 4. For example, the second secondary node may read the parity block, determine a new parity block based on the parity block and the parity block update information, and then store the new parity block, to update the parity block.

Different from a conventional method in which the parity block is read to the primary node, the primary node calculates a new parity block based on the first data block, the second data block, and the parity block, and then delivers the new parity block to the parity block storage node for update, in this embodiment of this application, the data block update operation is offloaded to the first secondary node and the second secondary node. Specifically, a process of updating the parity block in the data block update operation is divided into two steps, and the two steps are performed by different nodes.

Specifically, the primary node may perform the first step, specifically, calculate the parity block update information based on the first data block and the second data block, and then deliver the parity block update information to the parity block storage node. The parity block storage node performs the second step, specifically, update the parity block based on the parity block update information.

For ease of understanding, the following provides description with reference to a specific example.

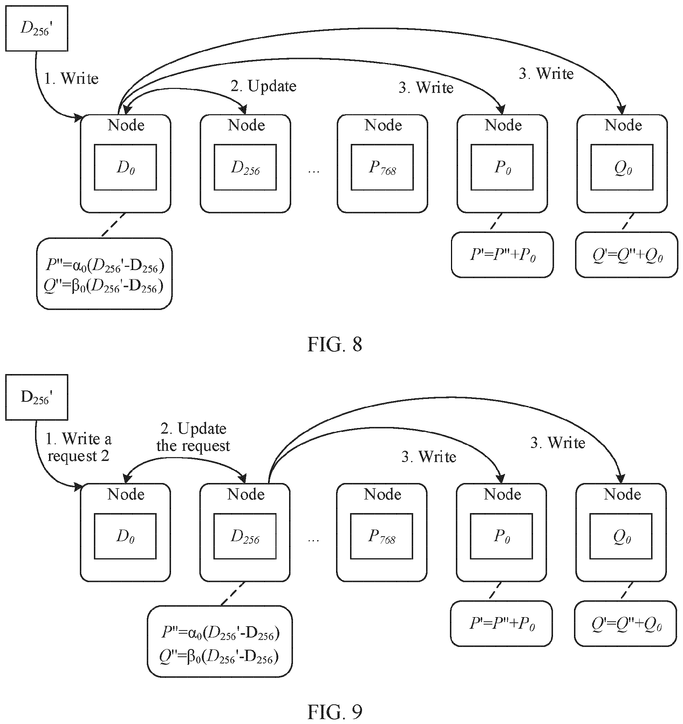

As shown in FIG. 8, the primary node completes calculation of parity block update information

$$P'' = \alpha_0(D'_{256} - D_{256})$$ and parity block update information $Q'' = \beta_0(D'_{256} - D_{256})$, and then the primary node delivers the parity block update information $P''$ and the parity block update information $Q''$ to the parity block storage node. The parity block storage node completes calculation of a new parity block $P' = P'' + P$ and a new parity block $Q' = Q'' + Q$. In addition, the read-write operation on a new data block $D'_{256}$ and an old data block $D_{256}$ is changed to an update operation at the primary node. Specifically, the update request carries the data to be written, but before the writing, the data of an original address is read as the return value of the request. After the data is written into the disk, the read data is returned to the primary node.

It should be further noted that S516 to S518 may not be performed when the data processing method in this embodiment of this application is performed. For example, the request 3 and the request 4 may indicate to offload all the data block update operations of the primary node to the first secondary node at which the first data block is located and the second secondary node at which the parity block is located.

For example, the first secondary node (that is, an update node) at which the first data block is located may directly calculate the parity block update information based on the read first data block and the read second data block. The primary node may send the request 4 by using the first secondary node, and the first secondary node adds the parity block update information to the request 4, and delivers the request 4 to the second secondary node at which the parity block is located, so that the second secondary node calculates a new parity block based on the parity block update information in the request 4, to implement parity block update.

For ease of understanding, the following still uses an example of updating a data block $D_{256}$ in an EC stripe for description.

As shown in FIG. 9, the first secondary node completes calculation of parity block update information $$P'' = \alpha_0(D'_{256} - D_{256})$$ and parity block update information $Q'' = \beta_0(D'_{256} - D_{256})$, and then the first secondary node delivers the parity block update information $P''$ and the parity block update information $Q''$ to the parity block storage node. The second secondary node completes calculation of a new parity block $P' = P'' + P$ and a new parity block $Q' = Q'' + Q$. In addition, the primary node only needs to obtain an operation result, and no data needs to be read to the primary node, to reduce data transmission. The read-write operation on a new data block $D'_{256}$ and an old data block $D_{256}$ is changed to an update operation at the first secondary node. Specifically, the update request carries the data to be written, but before the writing, the data of an original address is read as the return value of the request. After the data is written into the disk, the read data is returned to the primary node.

The foregoing describes some specific implementations in which the primary node sends the processing request to the set of secondary nodes, and the set of secondary nodes updates the first data block and the parity block based on the processing request in this embodiment of this application. In another possible implementation in this embodiment of this application, the primary node and the secondary node may also update the first data block and the parity block by using other method steps.

In some possible implementations, the primary node may further receive a request 5, where the request 5 may be a read request, and then the primary node may read a target data block based on the read request. It should be noted that, in an EC stripe query scenario, the request 5 may also be referred to as a fifth request. When the data blocks are stored by column, the primary node may read a target data block by column. Specifically, the read request may include a start address. Further, the read request may further include a length of to-be-read data. The primary node may determine a target node from the data block storage nodes based on the start address, and then the primary node may read the target data block from the target node by column.

In this way, when the data is read, required data can be read by reading a hard disk only once at one node, thereby reducing read amplification. FIG. 6 is used as an example for description. If data of 8 KB or 16 KB needs to be read from a start address, a data block $D_0$, a data block $D_1$, a data block $D_2$, and a data block $D_3$ are still be read. However, the data only needs to read in a same disk of a machine. This reduces a quantity of times of cross-disk data reading.

Based on the foregoing content descriptions, an embodiment of this application provides a data processing method. According to this method, a process of updating the parity block during the EC stripe update is divided into local check and remote update, and a process in which the new parity block calculated by the primary node is sent to the parity block storage node at which the parity block is located for update is optimized as follows: The primary node or the update node calculates the parity block update information, and the parity block storage node at which the parity block is located generates the new parity block based on the parity block update information and writes the new parity block. In this way, the primary node, the update node, or the like is prevented from reading the parity block from the parity block storage node. This reduces a quantity of read operations, reduces network transmission overheads, and ensures system performance. Further, the method supports converting row storage into column storage when the data is written. In this way, the data can be read in a same disk of a machine. This reduces a quantity of times of cross-disk data reading and improves read performance.

The foregoing describes the data processing method provided in this application with reference to FIG. 1 to FIG. 9. The following describes, with reference to the accompanying drawings, functions of a data processing apparatus and a data processing system that are provided in this application, and a computing device or a computing device cluster that implements the data processing apparatus and the data processing system.

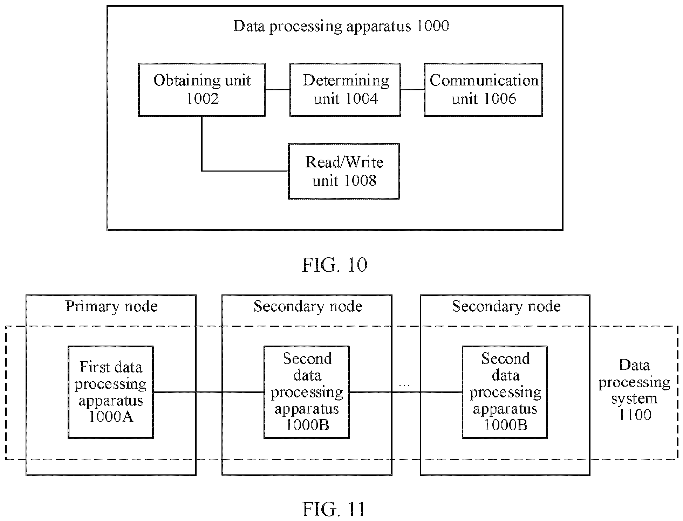

First, FIG. 10 is a schematic diagram of a structure of a data processing apparatus. The data processing apparatus 1000 may be deployed at a primary node in a distributed storage system. The apparatus 1000 includes:

an obtaining unit 1002, configured to obtain a first request, where the first request is used to update a data block in an erasure coding EC stripe;

a determining unit 1004, configured to determine a first data block based on the first request, where the first data block is a data block associated with the first request; and

a communication unit 1006, configured to send a processing request to a set of secondary nodes, where the set of secondary nodes includes at least one secondary node in the distributed storage system, and the processing request indicates to offload a data block update operation performed by the primary node to one or more secondary nodes in the set of secondary nodes.

It should be understood that the apparatus 1000 in this embodiment of this application may be implemented by a central processing unit (central processing unit, CPU), an application-specific integrated circuit (application-specific integrated circuit, ASIC), or a programmable logic device (programmable logic device, PLD). The PLD may be a complex programmable logic device (complex programmable logical device, CPLD), a field-programmable gate array (field-programmable gate array, FPGA), a generic array logic (generic array logic, GAL) device, a data processing unit (data processing unit, DPU), a system on chip (system on chip, SoC), or any combination thereof. Alternatively, when the data processing method shown in FIG. 5 to FIG. 9 may be implemented by using software, the apparatus 1000 and the modules of the apparatus 1000 may also be software modules.

In some possible implementations, the communication unit 1006 is specifically configured to:

send a second request including the second data block to a first secondary node; and

receive the first data block returned by the first secondary node when the first data block is updated to the second data block.

The determining unit 1004 is further configured to:

determine parity block update information based on the first data block and the second data block.

The communication unit 1006 is specifically configured to:

send a third request including the parity block update information to a second secondary node, where the parity block update information is used to update the parity block.

In some possible implementations, the communication unit 1006 is specifically configured to:

send a second request including the second data block to a first secondary node, where the second request indicates the first secondary node to update the first data block to the second data block; and determine parity block update information based on the first data block and the second data block; and

send, through the first secondary node, a third request including the parity block update information to a second secondary node, where the parity block update information is used to update the parity block.

In some possible implementations, the first data block is stored at the first secondary node, and the primary node and the first secondary node are a same node; or the parity block in the EC stripe is stored at the second secondary node, and the primary node and the second secondary node are a same node.

In some possible implementations, the obtaining unit 1002 is further configured to:

before the first request is obtained, obtain a fourth request including a data stream.

The apparatus 1000 further includes:

a read/write unit 1008, configured to split data in the data stream into a plurality of blocks, and write the plurality of data blocks into data block storage nodes in the distributed storage system by column, where the data block storage nodes include the primary node and the first secondary node.

The read/write unit 1008 is further configured to calculate the parity block based on each group of data blocks in the plurality of data blocks, and write the parity block into a parity block storage node in the distributed storage system, where the parity block storage node includes the second secondary node.

When the plurality of data blocks cannot be fully written into at least one EC stripe, the read/write unit is specifically configured to perform a no operation on a chunk that has no data in the at least one EC stripe.

In some possible implementations, the obtaining unit 1002 is further configured to:

obtain a fifth request including a start address.

The read/write unit 1008 is further configured to:

determine a target node based on the start address, and read a target data block by column.

Because the data processing apparatus 1000 shown in FIG. 10 corresponds to the method shown in FIG. 5, FIG. 8, and FIG. 9, for a specific implementation of the data processing apparatus 1000 shown in FIG. 10 and a technical effect thereof, refer to related descriptions in the foregoing embodiments. Details are not described herein again.

Then, FIG. 11 is a schematic diagram of a structure of a data processing system. The data processing system 1100 includes a first data processing apparatus 1000A and a second data processing apparatus 1000B. The first data processing apparatus 1000A is deployed at a primary node in a distributed storage system, and the second data processing apparatus 1000B is deployed at a secondary node in the distributed storage system.

The first data processing apparatus 1000A is configured to: obtain a first request, where the first request is used to update a first data block in an erasure coding EC stripe; determine the first data block based on the first request, where the first data block is a data block associated with the first request; and send a processing request to a set of secondary nodes, where the set of secondary nodes includes at least one secondary node in the distributed storage system, and the processing request indicates to offload a data block update operation performed by the primary node to one or more secondary nodes in the set of secondary nodes.

The second data processing apparatus 1000B is configured to update the first data block and a parity block based on the processing request.

In some possible implementations, the first data processing apparatus 1000A is specifically configured to:

send a second request including the second data block to a first secondary node.

The second data processing apparatus 1000B at the first secondary node is specifically configured to:

update the first data block to the second data block, and return the first data block.

The first data processing apparatus 1000A is further configured to:

determine parity block update information based on the first data block and the second data block.

The first data processing apparatus 1000A is specifically configured to:

send a third request including the parity block update information to the second secondary node.

The second data processing apparatus 1000B at the second secondary node is specifically configured to:

update the parity block based on the parity block update information.

In some possible implementations, the first data processing apparatus 1000A is specifically configured to:

send a second request including the second data block to a first secondary node.

The second data processing apparatus 1000B at the first secondary node is specifically configured to:

update the first data block to a second data block.

The second data processing apparatus 1000B at the first secondary node is further configured to:

determine parity block update information based on the first data block and the second data block.

The first data processing apparatus 1000A is specifically configured to:

send, through the first secondary node, a third request including the parity block update information to the second secondary node.

The second data processing apparatus 1000B at the second secondary node is specifically configured to:

update the parity block based on the parity block update information.

In some possible implementations, the second request is an update request, and the update request indicates the first secondary node to update the first data block to the second data block, and return the first data block.

Because the data processing system 1100 shown in FIG. 11 corresponds to the method shown in FIG. 5, FIG. 8, and FIG. 9, for a specific implementation of the data processing system 1100 shown in FIG. 11 and a technical effect thereof, refer to related descriptions in the foregoing embodiments. Details are not described herein again.

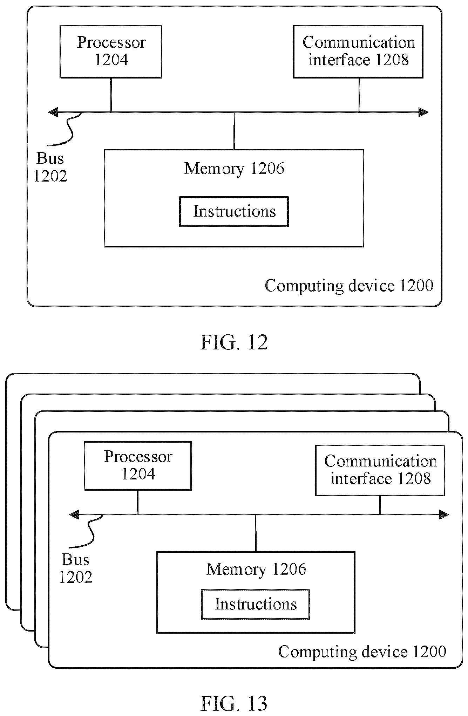

FIG. 12 is a diagram of a hardware structure of a computing device 1200 according to this application. The computing device 1200 may be the foregoing primary node, and is configured to implement a function of the data processing apparatus 1000. The computing device 1200 may be a server or a terminal device. The terminal device includes but is not limited to a desktop computer, a notebook computer, a tablet computer, or a smartphone.

As shown in FIG. 12, the computing device 1200 includes a bus 1202, a processor 1204, a memory 1206, and a communication interface 1208. The processor 1204, the memory 1206, and the communication interface 1208 communicate with each other through the bus 1202. It should be understood that quantities of processors and memories in the computing device 1200 are not limited in this application.

The bus 1202 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 12. However, it does not indicate that there is only one bus or only one type of bus. The bus 1202 may include a path for transmitting information between components (for example, the memory 1206, the processor 1204, and the communication interface 1208) of the computing device 1200.

The processor 1204 may be any one or more of processors such as a central processing unit (central processing unit, CPU), a graphics processing unit (graphics processing unit, GPU), a microprocessor (microprocessor, MP), a digital signal processor (digital signal processor, DSP), and the like.

The memory 1206 may include a volatile memory (volatile memory), for example, a random access memory (random access memory, RAM). The memory 1206 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 1206 stores executable program code, and the processor 1204 executes the executable program code to implement the foregoing data processing method. Specifically, the memory 1206 stores instructions used by the data processing apparatus 1000 to perform the data processing method.

The communication interface 1208 uses a transceiver module, for example, but not limited to a network interface card, a transceiver, to implement communication between the computing device 1200 and another device or a communication network.

This application further provides a computing device cluster. The computing device cluster includes at least one computing device. The computing device may be a server, for example, a central server, an edge server, or a local server in a local data center. In some embodiments, the computing device may also be a terminal device such as a desktop computer, a notebook computer, or a smartphone.

As shown in FIG. 13, the computing device cluster includes at least one computing device 1200. The memory 1206 in one or more computing devices 1200 in the computing device cluster may store same instructions used by the data processing system 1100 to perform the data processing method.

In some possible implementations, the one or more computing devices 1200 in the computing device cluster may also be configured to execute some instructions used by the data processing system 1100 to perform the data processing method. In other words, a combination of the one or more computing devices 1200 may jointly execute the instructions used by the data processing system 1100 to perform the data processing method.

It should be noted that the memories 1206 in different computing devices 1200 in the computing device cluster may store different instructions, to perform some functions of the data processing system 1100.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk drive, a hard disk, or a magnetic tape), an optical medium (for example, a DVD), a semiconductor medium (for example, a solid-state drive), or the like. The computer-readable storage medium includes instructions, and the instructions instruct a computing device to perform the foregoing data processing method.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform the foregoing data processing method.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions in embodiments of this application.

**Claims**

1. A data processing method, wherein the method is performed by a primary node in a distributed storage system, and comprises:

   obtaining a first request, wherein the first request is used to update a data block in an erasure coding EC stripe;
   determining a first data block based on the first request, wherein the first data block is a data block associated with the first request; and
   sending a processing request to a set of secondary nodes, wherein the set of secondary nodes comprises at least one secondary node in the distributed storage system, and the processing request indicates to offload a data block update operation performed by the primary node to one or more secondary nodes in the set of secondary nodes.

**2.** The method according to claim 1, wherein the sending a processing request to a set of secondary nodes comprises:

sending a second request comprising a second data block to a first secondary node;
receiving the first data block returned by the first secondary node when the first data block is updated to the second data block;
determining parity block update information based on the first data block and the second data block; and
sending a third request comprising the parity block update information to a second secondary node, wherein the parity block update information is used to update the parity block.

**3.** The method according to claim 1, wherein the sending a processing request to a set of secondary nodes comprises:

sending a second request comprising a second data block to a first secondary node, wherein the second request indicates the first secondary node to update the first data block to the second data block; and determining parity block update information based on the first data block and the second data block; and
sending, through the first secondary node, a third request comprising the parity block update information to a second secondary node, wherein the parity block update information is used to update the parity block.

**4.** The method according to any one of claims 1 to 3, wherein

the first data block is stored at the first secondary node, and the primary node and the first secondary node are a same node; or
the parity block in the EC stripe is stored at the second secondary node, and the primary node and the second secondary node are a same node.

**5.** The method according to any one of claims 1 to 4, wherein before the obtaining a first request, the method further comprises:

obtaining a fourth request comprising a data stream;
splitting data in the data stream into a plurality of blocks, and writing the plurality of data blocks into data block storage nodes in the distributed storage system by column, wherein the data block storage nodes comprise the primary node and the first secondary node; and
calculating the parity block based on each group of data blocks in the plurality of data blocks, and writing the parity block into a parity block storage node in the distributed storage system, wherein the parity block storage node comprises the second secondary node, wherein
when the plurality of data blocks cannot be fully written into at least one EC stripe, a no operation is performed on a chunk that has no data in the at least one EC stripe.

**6.** The method according to claim 5, wherein the method further comprises:

obtaining a fifth request comprising a start address; and
determining a target node based on the start address, and reading a target data block by column.

**7.** A data processing apparatus, wherein the apparatus is deployed at a primary node in a distributed storage system, and the apparatus comprises:

an obtaining unit, configured to obtain a first request, wherein the first request is used to update a data block in an erasure coding EC stripe;
a determining unit, configured to determine a first data block based on the first request, wherein the first data block is a data block associated with the first request; and
a communication unit, configured to send a processing request to a set of secondary nodes, wherein the set of secondary nodes comprises at least one secondary node in the distributed storage system, and the processing request indicates to offload a data block update operation performed by the primary node to one or more secondary nodes in the set of secondary nodes.

**8.** The apparatus according to claim 7, wherein the communication unit is specifically configured to:

send a second request comprising a second data block to a first secondary node; and
receive the first data block returned by the first secondary node when the first data block is updated to the second data block;

the determining unit is further configured to:

determine parity block update information based on the first data block and the second data block; and the communication unit is specifically configured to:

send a third request comprising the parity block update information to a second secondary node, wherein the parity block update information is used to update the parity block.

9. The apparatus according to claim 7, wherein the communication unit is specifically configured to:

send a second request comprising a second data block to a first secondary node, wherein the second request indicates the first secondary node to update the first data block to the second data block; and determine parity block update information based on the first data block and the second data block; and send, through the first secondary node, a third request comprising the parity block update information to a second secondary node, wherein the parity block update information is used to update the parity block.

10. The apparatus according to any one of claims 7 to 9, wherein

the first data block is stored at the first secondary node, and the primary node and the first secondary node are a same node; or
the parity block in the EC stripe is stored at the second secondary node, and the primary node and the second secondary node are a same node.

11. The apparatus according to any one of claims 7 to 10, wherein the obtaining unit is further configured to:

before the first request is obtained, obtain a fourth request comprising a data stream; and
the apparatus further comprises:

a read/write unit, configured to split data in the data stream into a plurality of blocks, and write the plurality of data blocks into data block storage nodes in the distributed storage system by column, wherein the data block storage nodes comprise the primary node and the first secondary node; and
the read/write unit is further configured to calculate the parity block based on each group of data blocks in the plurality of data blocks, and write the parity block into a parity block storage node in the distributed storage system, wherein the parity block storage node comprises the second secondary node, wherein
when the plurality of data blocks cannot be fully written into at least one EC stripe, the read/write unit is specifically configured to perform a no operation on a chunk that has no data in the at least one EC stripe.

12. The apparatus according to claim 11, wherein the obtaining unit is further configured to:

obtain a fifth request comprising a start address; and
the read/write unit is further configured to:
determine a target node based on the start address, and read a target data block by column.

13. A computing device cluster, wherein the computing device cluster comprises at least one computing device, the at least one computing device comprises at least one processor and at least one memory, the at least one memory stores computer-readable instructions, and the at least one processor executes the computer-readable instructions, so that the computing device cluster is enabled to perform the method according to any one of claims 1 to 6.

14. A computer-readable storage medium, comprising computer-readable instructions, wherein the computer-readable instructions are used to implement the method according to any one of claims 1 to 6.

15. A computer program product comprising computer-readable instructions, wherein the computer-readable instructions are used to implement the method according to any one of claims 1 to 6.

FIG. 1

Node $D_0$  Node $D_1$  ...  Node $D_{k-1}$  Node $P$  Node $Q$

$D_1'$

1. Write

3. Write   3. Write   3. Write

2. Read   2. Read   2. Read

$P''=\alpha_0(D_1'-D_1)+P$

$Q''=B_0(D_1'-D_1)+Q$

EP 4 509 988 A1

17

FIG. 2

FIG. 3

Application client

Storage service

$D_0$   $D_1$   $D_2$   $D_3$   ...   $D_{k-1}$   P   Q

EC stripe

Distributed storage system

FIG. 4

```
Primary node          First secondary          Second
                          node              secondary node

Obtain a request 1
                    ⌐ S502

Split data in a data stream
included in the request 1, to
obtain a plurality of data blocks  ⌐ S504

        S506: Write the data
          blocks by column

        S506: Write the data blocks
              by column

Calculate a parity block based
on each group of data blocks in  ⌐ S508
the plurality of data blocks

        S510: The primary node writes the parity block into the
                    second secondary node

Obtain a request 2
                    ⌐ S511

Determine a first data block based
on the request 2          ⌐ S512

        S514: The primary node sends
          a request 3 to the first
        secondary node at which the
          first data block is located

        Update the first data block to a second data block  ⌐ S516

        S518: The first secondary
        node at which the first data
        block is located returns the
              first data block

Determine parity block update
information based on the first data  ⌐ S520
block and the second data block

        S522: The primary node sends a request 4 carrying the       S524
                parity block update information

                        Update the parity block based on the
                              parity block update information
```

FIG. 5

| $D_0$ | $D_1$ | $D_2$ | $D_3$ | $P_0$ | $Q_0$ |
|-------|-------|-------|-------|-------|-------|
| $D_4$ | $D_5$ | $D_6$ | $D_7$ | $P_1$ | $Q_1$ |
| $D_8$ | $D_9$ | $D_{10}$ | $D_{11}$ | $P_2$ | $Q_2$ |
| $D_{12}$ | $D_{13}$ | $D_{14}$ | $D_{15}$ | $P_3$ | $Q_3$ |

*Row storage to colum storage*

| $D_0$ | $D_{256}$ | $D_{512}$ | $P_{768}$ | $P_0$ | $Q_0$ |
|-------|-----------|-----------|-----------|-------|-------|
| $D_1$ | $D_{257}$ | $D_{513}$ | $P_{769}$ | $P_1$ | $Q_1$ |
| ... | ... | ... | ... | ... | ... |
| $D_{255}$ | $D_{511}$ | $D_{767}$ | $P_{1023}$ | $P_3$ | $Q_3$ |

FIG. 6

Chunk 1  Chunk 2  Chunk 3  Chunk 4  Chunk P  Chunk Q

*Op::other*
*Op::zero*
*Op::write*

Transaction 1  Transaction 2  Transaction 3  Transaction 4  Transaction 5  Transaction 6

FIG. 7

$D_{256}{}'$

1. Write

2. Update

3. Write

3. Write

| Node | Node | | Node | Node | Node |
|---|---|---|---|---|---|
| $D_0$ | $D_{256}$ | ... | $P_{768}$ | $P_0$ | $Q_0$ |

$$P''=\alpha_0(D_{256}{}'\text{-}D_{256})$$
$$Q''=\beta_0(D_{256}{}'\text{-}D_{256})$$

$$P'=P''+P_0$$

$$Q'=Q''+Q_0$$

FIG. 8

$D_{256}{}'$

1. Write a request 2

2. Update the request

3. Write

3. Write

| Node | Node | | Node | Node | Node |
|---|---|---|---|---|---|
| $D_0$ | $D_{256}$ | ... | $P_{768}$ | $P_0$ | $Q_0$ |

$$P''=\alpha_0(D_{256}{}'\text{-}D_{256})$$
$$Q''=\beta_0(D_{256}{}'\text{-}D_{256})$$

$$P'=P''+P_0$$

$$Q'=Q''+Q_0$$

FIG. 9

Data processing apparatus 1000

| Obtaining unit 1002 | Determining unit 1004 | Communication unit 1006 |
| Read/Write unit 1008 |

FIG. 10

| Primary node | Secondary node | Secondary node | |
| First data processing apparatus 1000A | Second data processing apparatus 1000B | ... | Second data processing apparatus 1000B | Data processing system 1100 |

FIG. 11

FIG. 12

FIG. 13

## INTERNATIONAL SEARCH REPORT

| | International application No. |
|---|---|
| | **PCT/CN2023/101259** |

**A.    CLASSIFICATION OF SUBJECT MATTER**

G06F 11/10(2006.01)i

According to International Patent Classification (IPC) or to both national classification and IPC

**B.    FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

ENTXTC, CNTXT, ENTXT, CNKI, DWPI, IEEE: 纠删码, 奇偶校验, 节点, 主节点, 从节点, 更新, 数据库, 条带, 卸载, 下推, ec, erasure, code, parity, node, master, slave, update, database, stripe, unload, push, Down

**C.    DOCUMENTS CONSIDERED TO BE RELEVANT**

| Category* | Citation of document, with indication, where appropriate, of the relevant passages | Relevant to claim No. |
|---|---|---|
| X | US 2021096952 A1 (DELL PRODUCTS L.P.) 01 April 2021 (2021-04-01)<br>    claims 1-8, and description, paragraphs 2-206 | 1-15 |
| X | US 2021096954 A1 (DELL PRODUCTS L.P.) 01 April 2021 (2021-04-01)<br>    description, paragraphs 43-206 | 1-15 |
| X | US 2021097034 A1 (DELL PRODUCTS L.P.) 01 April 2021 (2021-04-01)<br>    description, paragraphs 43-206 | 1-15 |
| A | CN 105930103 A (NANJING UNIVERSITY) 07 September 2016 (2016-09-07)<br>    entire document | 1-15 |
| A | WO 2021189905 A1 (PING AN TECHNOLOGY (SHENZHEN) CO., LTD.) 30 September 2021 (2021-09-30)<br>    entire document | 1-15 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 September 2023** | **25 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| US | 2021096952 | A1 | 01 April 2021 | US | 11068345 | B2 | 20 July 2021 |
| US | 2021096954 | A1 | 01 April 2021 | US | 11481293 | B2 | 25 October 2022 |
| US | 2021097034 | A1 | 01 April 2021 | US | 11360949 | B2 | 14 June 2022 |
| CN | 105930103 | A | 07 September 2016 | CN | 105930103 | B | 16 April 2019 |
| WO | 2021189905 | A1 | 30 September 2021 | CN | 112256472 | A | 22 January 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210740423

- CN 202211017671X